# EUROPEAN PATENT APPLICATION

(11) **EP 4 653 568 A1**
(43) Date of publication of application: **26.11.2025**
(21) Application number: 23944069.6
(22) Date of filing: 06.07.2023
(51) Int. Cl.: C22C 38/02, C22C 38/04, C22C 38/18, C22C 38/08, C22C 38/12, C22C 38/16, C21C 5/52

(54) **METHOD FOR PRODUCING AND PREPARING STEEL BAR FOR AUTOMOBILE SHAFT SLEEVE BY MEANS OF ECOLOGICAL ELECTRIC FURNACE**

(71) Applicant: Bengang Steel Plates Co., Ltd., Benxi, Liaoning 117022 (CN)
(72) Inventor: ZHANG, Qun, Benxi, Liaoning 117022 (CN); LU, Bingjun, Benxi, Liaoning 117022 (CN); YAN, Jijun, Benxi, Liaoning 117022 (CN); KAN, Kai, Benxi, Liaoning 117022 (CN); ZHAO, Qianshui, Benxi, Liaoning 117022 (CN); QI, Feng, Benxi, Liaoning 117022 (CN)
(74) Representative: Murgitroyd & Company
(86) International application number: PCT/CN2023/106097
(87) International publication number: WO 2025/007342

(57) **Abstract**

Provided is a method for producing and preparing a steel bar for an automobile shaft sleeve by means of an ecological electric furnace. The steer bar comprises, in percentage by mass: 0.18-0.23% of C, 0.20-0.35% of Si, 0.42-0.60% of Mn, less than or equal to 0.015% of P, less than or equal to 0.010% of S, 0.82-1.00% of Cr, less than or equal to 0.25% of Ni, 0.41-0.53% of Mo, less than or equal to 0.15% of Cu, and the balance of Fe and inevitable impurities. By means of smelting in an ecological electric furnace, LF refining, RH refining, continuous casting, a heating process and a rolling process, the method achieves a breakthrough in batch production of the steel bar for an automobile shaft sleeve by means of a continuous casting procedure using the ecological electric furnace.

## Description

### TECHNICAL FIELD

The present invention belongs to the field of special steel, in particular to a method for producing and preparing a steel bar for automotive bushings by means of ecological and economical arc furnace.

### BACKGROUND ART

As a flexible connecting component between automotive parts, automotive bushings can improve the comfort, handling stability and noise control of automobiles. Different automobile models have different requirements for the stiffness performance of bushings, so the structure of bushing products should be determined according to various requirements.

The automotive bushings should have good wear resistance, tensile strength, temperature resistance and corrosion resistance. In addition, it should also have good fatigue resistance, impact resistance and vibration resistance to ensure the normal operation of automobiles. As an important component of transmission devices, the quality requirements for automotive bushings are strict.

The quality of steels used for automotive bushings directly affects the service life and wear resistance of the transmission devices, and even impacts the safety of entire working process of the transmission devices.

Therefore, it is necessary to develop steels for automotive bushings with excellent mechanical properties, high hardness and high purity to meet the demands of high-end products.

### SUMMARY

An object of the present invention is to provide a method for producing steel bar for automotive bushings. The method adopts processes of ecological and economical arc furnace (ECOARC) smelting, LF refining, RH refining, and continuous casting to produce and manufacture steel bars for automotive bushings, meeting high-end application requirements. The method achieves a breakthrough in mass production of steel bars for automotive bushings by means of an ECOARC continuous casting processes, which not only ensures mechanical properties, high hardness and high purity of the finished steel bars for the automotive bushings, but also guarantees good surface quality thereof.

To achieve the above object, the present invention provides a method for producing and preparing steel bars for automotive bushings, which includes component design and process design. The method including processes of ecological and economical arc furnace smelting, LF refining, RH refining, continuous casting, heating and rolling. The steel produce by this method meets the quality requirements of steel bars for automotive bushings, with the mechanical properties, high hardness and high purity meeting standard requirements.

A steel bar for automotive bushings is provided, including the following chemical components in percentage by mass: 0.18-0.23% of C, 0.20-0.35% of Si, 0.42-0.60% of Mn, less than or equal to 0.015% of P, less than or equal to 0.010% of S, 0.82-1.00% of Cr, less than or equal to 0.25% of Ni, 0.41-0.53% of Mo, less than or equal to 0.15% of Cu, and the balance of Fe and inevitable impurities.

A method for producing and preparing the abovementioned steel bar for an automotive bushing by means of ecological and economical arc furnace smelting is also provided, including processes of ecological and economical arc furnace smelting, LF refining, RH refining, continuous casting, heating furnace heating, and rolling.

The ecological and economical arc furnace smelting uses 100% (in percentage by mass) scrap steel as raw materials for smelting, with a loading amount of the scrap steel of 116-122 t and a tapping temperature of 1655-1665 °C. A C content of liquid steel at tapping is 0.08-0.10% and a P content is less than or equal to 0.010%. Auxiliary materials and alloys are added into the liquid steel between one forth and one third of the tapping. A tap weight of the liquid steel is 107-112 t. A smelting cycle lasts 45-55 min. Alloy addition per ton of steel is as follows: 4.3-4.4 kg/t of siliconmanganese, 11-11.5 kg/t of low-carbon ferrochrome, 17-17.2 kg/t of coke particles (Φ20-60 mm), 2-2.2 kg/t of ferroaluminum (Φ40-70 mm), and 930-940 kg/t of heavy melting steel (greater than or equal to 800mm*600mm). Auxiliary material addition per ton of steel is as follows: 20-21 kg/t of dolomite (Φ20-70 mm), 43-44 kg/t of active lime (Φ10-70 mm), and 6-6.2 kg/t of ladle ash.

Based on the abovementioned technical solutions, further, the LF refining adopts a high current of 20000-25000 A to heat for slag smelting. When a slag surface in the LF fluctuates while the liquid steel and electric arc remain covered, the active lime is supplemented into the liquid steel. After 5 min from addition of the active lime, a first sample is taken for analyzing chemical composition of the liquid steel. Alloys and silicon carbide are then supplemented into the liquid steel according to target values of the chemical composition. The alloys and silicon carbide should be introduced into the argon gas stream to promote their rapid melting and homogenization. When the temperature of the liquid steel reaches 1590-1600 °C, 2-3 kg of diffusion deoxidizer is added to per ton of steel for diffusion deoxygenation, and the door of the LF is closed for 10-12 min. When the temperature of liquid steel reaches 1620-1630 °C, a second sample is taken for analyzing chemical composition of the liquid steel to determine a deviation of each chemical element's content from the target value. After the second sample is taken away, a refining cycle lasts 45-55 min. Supplemented alloy addition per ton of liquid steel is as follows: 3.4-3.5 kg/t of ferrosilicon, 1.9-2.0 kg/t of high-carbon ferromanganese, 0.5-0.55 kg/t of high-carbon ferrochrome, 1.8-1.9 kg/t of alumina balls (Φ 10-15 mm), 0.35-0.36 kg/t of coke particles (Φ 20-60 mm), 6.6-6.7 kg/t of ferromolybdenum (FeMo60-B), and 1-1.1 m/t of aluminum wire (Φ 10-12 mm). Auxiliary material addition per ton of liquid steel is as follows: 6-6.2 kg/t of active lime (Φ 10-70 mm), and 1-1.1 kg/t of silicon carbide (Φ 2 -5 mm).

For the RH refining process, a ladle arrival temperature is 1675-1685 °C, an processing time lasts 28-32 min, and an argon pressure in the ladle before a vacuum pump startup is controlled to be 0.1-0.3 MPa, ensuring that the slag surface slightly fluctuates while the liquid steel remains covered. Further, when a vacuum degree of a vacuum chamber reaches 100-110 Pa, timing begins for 10-15 min, while the argon pressure is adjusted to 0.3-0.5 MPa for calm argon blowing. After calm argon blowing is completed, 2-2.1 m of silicon-calcium alloy cored wire (Φ 12-14 mm) and 0.6-0.7 kg of covering agent per ton of steel are added into the liquid steel. A ladle departure temperature is 1625-1635 °C.

Based on the abovementioned technical solutions, for the continuous casting process, a ladle arrival temperature is 1620-1630 °C with an amount of the liquid steel of 95-103 t, and a hydrogen content in a tundish is controlled to be less than or equal to 2 ppm. Protected casting is maintained throughout the continuous casting, and a medium-carbon steel mold flux is used in mold.

Based on the abovementioned technical solutions, for the heating process in a heating furnace, the temperature of a continuous casting billet entering the heating furnace is 350-550 °C; the temperature of a preheating section of the heating furnace is 650-700 °C with a heating time of 1.3-1.5 h; the temperature of a heating section 2 is 840-860 °C with a heating time of 1.3-1.5 h; the temperature of a heating section 1 is 1190-1220 °C with a heating time of 1.3-1.5 h; the temperature of a soaking section is 1180-1210 °C with a heating time of 1.3-1.5 h; and a tapping temperature is 1180-1190 °C.

Based on the abovementioned technical solutions, for the rolling process, an initial rolling temperature is 1100-1130 °C, and a final rolling temperature is 850-950 °C. The rolling process includes rolling by means of blooming mill and continuous rolling mill as follows:

A breakdown (BD) blooming process for a continuous casting billet after heating involves 9 passes of rolling on the continuous casting billet, including steps of turning over the casting billet, then performing a first pass rolling on the casting billet with a reduction amount of 65-65.1 mm and a second pass rolling on the casting billet with a reduction amount of 70-70.1 mm, then turning over the casting billet and performing a third pass rolling on the casting billet with a reduction amount of 64-64.1 mm and a forth pass rolling on the casting billet with a reduction amount of 90-90.1 mm, and then turning over the casting billet and performing a fifth pass rolling on the casting billet with a reduction amount of 42-42.1 mm, a sixth pass rolling on the casting billet with a reduction amount of 40-40.1 mm, a seventh pass rolling on the casting billet with a reduction amount of 35-35.1 mm, and an eighth pass rolling on the casting billet with a reduction amount of 34-34.1 mm, and then turning over the casting billet and performing a ninth pass rolling on the casting billet with a reduction amount of 82-82.1 mm, followed by making the casting billet pass through three stands of 850 mm rolling mills, one stand of 735 mm rolling mill, and a 8-stand continuous rolling mill unit for further rolling; and

A continuous rolling process in obtaining a finished product with a specification of Φ180 mm involves 6 passes of rolling on a steel billet after breakdown blooming, including a first pass rolling in obtaining a steel billet with a height of 229-229.1 mm and a width of 245-245.1 mm, a second pass rolling in obtaining a steel billet with a height of 192-192.1 mm and a width of 235-235.1 mm, a third pass rolling in obtaining a steel billet with a height of 200-200.1 mm and a width of 195-195.1 mm, a forth pass rolling in obtaining a steel billet with a height of 173-173.1 mm and a width of 205-205.1 mm, a fifth pass rolling in obtaining a steel billet with a height of 182.4-182.5 mm and a width of 182.4-182.5 mm, and a sixth pass rolling in obtaining a steel billet with a height of 182.4-182.5 mm and a width of 182.4-182.5 mm. A finished product steel is produced after the 6 passes of rolling.

Based on the abovementioned technical solutions, further, the product steel after rolling is subjected to heating preservation under conditions of a pit-entry temperature of the steel of greater than or equal to 600 °C, a holding time of 48-55 h, and a pit-exit temperature of the steel of less than or equal to 150 °C.

Based on the abovementioned technical solutions, further, the size of the continuous casting billet is 390 mm*480 mm.

Further, the product steel after heat preservation undergoes steps of finishing, inspection, packaging and warehousing, and delivery.

Based on the abovementioned technical solutions, further, after heat preservation, the steel is subjected to heat treatment, including the following steps of:
1) Quenching the steel at a temperature of 870-890°C for 0.8-1.2 h, followed by oil-cooling the steel; and
2) Tempering the quenched steel at a temperature of 490-510°C for 1.6-2.0 h, followed by water-cooling the steel.

Based on the abovementioned technical solutions, further, a 25 mm diameter blank from the steel after heat preservation is drilled for heat treatment.

Beneficial effects of the present invention:
1) The present invention employs processes of ecological and economical arc furnace (ECOARC) smelting, LF refining, RH refining, continuous casting for 390 mm*480 mm continuous billets, and rolling to produce 38CrSiA steel bars for automotive bushing with a specification of Φ150 mm. The produced steel bars meet the mechanical property requirements and ensure the purity thereof.
2) The present invention ensures good surface quality and impact performance by means of optimized composition design and production process.
3) The finished steel products produced by the present invention meet the requirements for high-end products in terms of macrostructure, non-metallic inclusions and mechanical properties.

### DETAILED DESCRIPTION OF THE EMBODIMENTS

The following non-limiting embodiments may enable those ordinary skill in the art to more fully understand the present invention, but do not limit the present invention in any way.

### Embodiment 1

### 1. Chemical composition

Chemical composition of a steel includes the following components in percentage by mass: 0.20% of C, 0.28% of Si, 0.49% of Mn, 0.010% of P, 0.003% of S, 0.90% of Cr, 0.05% of Ni, 0.48% of Mo, 0.05% of Cu, and the balance of Fe and inevitable impurities.

### 2. Process for producing a steel bar for automotive shaft sleeve by means of ecological and economical arc furnace

Process route: ECOARC smelting + LF refining + RH refining + continuous casting → heating in a heating furnace → heat preservation → finishing → inspection → packaging and warehousing→delivery.

### (1) ECOARC smelting

The raw material used for smelting was 100% scrap steel, with a loading amount of 118 t and a tapping temperature of 1660 °C. A C content of liquid steel at tapping was 0.08% and a P content was 0.008%. Auxiliary materials and alloys were added into the liquid steel when one fourth of the steel has been tapped. A tap weight of the liquid steel was 110 t. A smelting cycle lasted 50 min. Alloy addition per ton of liquid steel were as follows: 4.3 kg/t of siliconmanganese, 11 kg/t of low-carbon ferrochrome, 17 kg/t of coke particles (Φ50 mm), 2 kg/t of ferroaluminum (Φ50 mm), and 934 kg/t of heavy melting steel (800mm*600mm). Auxiliary material addition per ton of liquid steel is as follows: 20 kg/t of dolomite (Φ50 mm), 43 kg/t of active lime (Φ40 mm), and 6kg/t of ladle ash.

### (2) LF refining

A high current of 23000 A was used to heat for slag smelting. When the slag surface in the LF fluctuated while the liquid steel and electric arc remain covered, the active lime was supplemented into the liquid steel. After 5 min from addition of the active lime, a first sample was taken for analyzing chemical composition of the liquid steel. Alloys and silicon carbide were then supplemented into the liquid steel according to target values of the chemical composition. The alloys and silicon carbide were introduced into the argon gas stream to promote their rapid melting and homogenization. When the temperature of the liquid steel reached 1595 °C, 2.5kg of diffusion deoxidizer was added to per ton of the liquid steel for diffusion deoxygenation, and the LF door was closed for 10 min. When the temperature of liquid steel reached 1625 °C, a second sample was taken for analyzing chemical composition of the liquid steel to determine a deviation of each chemical element's content from the target value. After the second sample was taken away, a refining cycle lasted 48 min. Supplemented alloy addition per ton of liquid steel was as follows: 3.4 kg/t of ferrosilicon, 1.9 kg/t of high-carbon ferromanganese, 0.52 kg/t of high-carbon ferrochrome, 1.8 kg/t of alumina balls (Φ10 mm), 0.35 kg/t of coke particles (Φ50 mm), 6.6 kg/t of ferromolybdenum (FeMo60-B), and 1.0 m/t of aluminum wire (Φ10 mm). Auxiliary material addition per ton of liquid steel was as follows: 6 kg/t of active lime (Φ40 mm), and 1 kg/t of silicon carbide (Φ4 mm).

### (3) RH refining

A ladle arrival temperature was 1679 °C, a processing time lasted 30 min, and an argon pressure in the ladle before a vacuum pump startup was controlled to be 0.15 MPa to ensure that the slag surface slightly fluctuated while the liquid steel remained covered. When a vacuum degree of a vacuum chamber reached 100 Pa, timing began for 15 min, while the argon pressure is adjusted to 0.4 MPa for calm argon blowing. After calm argon blowing is completed, 2 m of silicon-calcium alloy cored wire (Φ14 mm) and 0.6 kg of covering agent per ton of liquid steel were added into the liquid steel. A ladle departure temperature is 1629 °C.

### (4) Continuous casting:

A ladle arrival temperature was 1625 °C with an amount of the liquid steel of 98 t, and a hydrogen content in a tundish was controlled to be 1.4 ppm. Protected casting was maintained throughout the continuous casting, and a medium-carbon steel mold flux was used in mold.

### (5) Heating process

The temperature of a continuous casting billet entering the heating furnace was 450°C. The temperature of a preheating section of the heating furnace was 680 °C with a heating time of 1.3 h. The temperature of a heating section 2 was 840 °C with a heating time of 1.4 h. The temperature of a heating section 1 was 1198 °C with a heating time of 1.4 h. The temperature of a soaking section was 1195 °C with a heating time of 1.4 h. The tapping temperature was 1185 °C.

### (6) Rolling process

An initial rolling temperature was 1100 °C, and a final rolling temperature was 880 °C.

BD blooming process for a 390 mm*480 mm continuous casting billet involved 9 passes of rolling on the continuous casting billet, including steps of turning over the casting billet, then performing a first pass rolling on the casting billet with a reduction amount of 65 mm and a second pass rolling with a reduction amount of 70 mm, then turning over the casting billet and performing a third pass rolling on the casting billet with a reduction amount of 64 mm and a forth pass rolling with a reduction amount of 90 mm, and then turning over the casting billet and performing a fifth pass rolling on the casting billet with a reduction amount of 42 mm, a sixth pass rolling with a reduction amount of 40 mm, a seventh pass rolling with a reduction amount of 35 mm, and an eighth pass rolling with a reduction amount of 34 mm, and then turning over the casting billet and performing a ninth pass rolling on the casting billet with a reduction amount of 82 mm, followed by making the casting billet pass through three stands of 850 mm rolling mills, one stand of 735 mm rolling mill, and a 8-stand continuous rolling mill unit for further rolling.

Continuous rolling process in obtaining a finished product with a specification of Φ180 mm involved 6 passes of rolling on a steel billet after BD blooming, including a first pass rolling in obtaining a steel billet with a height of 229 mm and a width of 245 mm, a second pass rolling in obtaining a steel billet with a height of 192 mm and the width is 235 mm, a third pass rolling in obtaining a steel billet with a height of 200 mm and a width of 195 mm, a forth pass rolling in obtaining a steel billet with a height of 173 mm and a width of 205 mm, a fifth pass rolling in obtaining a steel billet with a height of 182.4 mm and a width of 182.4 mm, and a sixth pass rolling in obtaining a steel billet with a height of 182.4 mm and a width of 182.4 mm. A finished product steel was produced after the 6 passes of rolling.

### (7) Heating preservation process

The product steel after rolling was subjected to heating preservation under conditions of a pit-entry temperature of the steel of 650 °C, a holding time of 53 h, and a pit-exit temperature of the steel of 110 °C.

### Embodiment 2

### 1. Chemical composition

Chemical composition of a steel includes the following components in percentage by mass: 0.19% of C, 0.28% of Si, 0.48% of Mn, 0.011% of P, 0.004% of S, 0.88% of Cr, 0.04% of Ni, 0.49% of Mo, 0.03% of Cu, and the balance of Fe and inevitable impurities.

### 2. Process for producing a steel bar for automotive shaft sleeve by means of ecological and economical arc furnace

Process route: ECOARC smelting + LF refining + RH refining + continuous casting → heating in a heating furnace → heat preservation → finishing → inspection → packaging and warehousing→delivery.

### (1) ECOARC smelting

The raw material used for smelting was 100% scrap steel, with a loading amount of 118 t and a tapping temperature of 1660°C. A C content of liquid steel at tapping was 0.09% and a P content was 0.008%. Auxiliary materials and alloys were added into the liquid steel when one fourth of the steel has been tapped. A tap weight of the liquid steel was 109 t. A smelting cycle lasted 50 min. Alloy addition per ton of liquid steel were as follows: 4.3 kg/t of siliconmanganese, 11.2 kg/t of low-carbon ferrochrome, 17 kg/t of coke particles (Φ50 mm), 2 kg/t of ferroaluminum (Φ50 mm), and 935 kg/t of heavy melting steel. Auxiliary material addition per ton of liquid steel is as follows: 20 kg/t of dolomite (Φ40 mm), 43 kg/t of active lime (Φ50 mm), and 6kg/t of ladle ash.

### (2) LF refining

A high current of 22000 A was used to heat for slag smelting. When the slag surface in the LF fluctuated while the liquid steel and electric arc remain covered, the active lime was supplemented into the liquid steel. After 5 min from addition of the active lime, a first sample was taken for analyzing chemical composition of the liquid steel. Alloys and silicon carbide were then supplemented into the liquid steel according to target values of the chemical composition. The alloys and silicon carbide were introduced into the argon gas stream to promote their rapid melting and homogenization. When the temperature of the liquid steel reached 1596 °C, 2.6 kg of diffusion deoxidizer was added to per ton of the liquid steel for diffusion deoxygenation, and the LF door was closed for 10 min. When the temperature of liquid steel reached 1626 °C, a second sample was taken for analyzing chemical composition of the liquid steel to determine a deviation of each chemical element's content from the target value. After the second sample was taken away, a refining cycle lasted 49 min. Supplemented alloy addition per ton of liquid steel was as follows: 3.4 kg/t of ferrosilicon, 1.9 kg/t of high-carbon ferromanganese, 0.52 kg/t of high-carbon ferrochrome, 1.8 kg/t of alumina balls, 0.35 kg/t of coke particles (Φ50 mm), 6.6 kg/t of ferromolybdenum (FeMo60-B), and 1.0 m/t of aluminum wire (Φ10 mm). Auxiliary material addition per ton of liquid steel was as follows: 6 kg/t of active lime (Φ50 mm), and 1 kg/t of silicon carbide (Φ4 mm).

### (3) RH refining

A ladle arrival temperature was 1680 °C, a processing time lasted 30 min, and an argon pressure in the ladle before a vacuum pump startup was controlled to be 0.16 MPa to ensure that the slag surface slightly fluctuated while the liquid steel remained covered. When a vacuum degree of a vacuum chamber reached 100 Pa, timing began for 12 min, while the argon pressure is adjusted to 0.4 MPa for calm argon blowing. After calm argon blowing is completed, 2 m of silicon-calcium alloy cored wire (Φ14 mm) and 0.6 kg of covering agent per ton of liquid steel were added into the liquid steel. A ladle departure temperature is 1629 °C.

### (4) Continuous casting:

A ladle arrival temperature was 1626 °C with an amount of the liquid steel of 98 t, and a hydrogen content in a tundish was controlled to be 1.5 ppm. Protected casting was maintained throughout the continuous casting, and a medium-carbon steel mold flux was used in mold.

### (5) Heating process

The temperature of a continuous casting billet entering the heating furnace was 480°C. The temperature of a preheating section of the heating furnace was 680 °C with a heating time of 1.4 h. The temperature of a heating section 2 was 840 °C with a heating time of 1.4 h. The temperature of a heating section 1 was 1200 °C with a heating time of 1.4 h. The temperature of a soaking section was 1195 °C with a heating time of 1.4 h. The tapping temperature was 1185 °C.

### (6) Rolling process

An initial rolling temperature was 1100 °C, and a final rolling temperature was 890 °C.

BD blooming process for a 390 mm*480 mm continuous casting billet involved 9 passes of rolling on the continuous casting billet, including steps of turning over the casting billet, then performing a first pass rolling on the casting billet with a reduction amount of 65 mm and a second pass rolling with a reduction amount of 70 mm, then turning over the casting billet and performing a third pass rolling on the casting billet with a reduction amount of 64 mm and a forth pass rolling with a reduction amount of 90 mm, and then turning over the casting billet and performing a fifth pass rolling on the casting billet with a reduction amount of 42 mm, a sixth pass rolling with a reduction amount of 40 mm, a seventh pass rolling with a reduction amount of 35 mm, and an eighth pass rolling with a reduction amount of 34 mm, and then turning over the casting billet and performing a ninth pass rolling on the casting billet with a reduction amount of 82 mm, followed by making the casting billet pass through three stands of 850 mm rolling mills, one stand of 735 mm rolling mill, and a 8-stand continuous rolling mill unit for further rolling.

Continuous rolling process in obtaining a finished product with a specification of Φ180 mm involved 6 passes of rolling on a steel billet after BD blooming, including a first pass rolling in obtaining a steel billet with a height of 229 mm and a width of 245 mm, a second pass rolling in obtaining a steel billet with a height of 192 mm and the width is 235 mm, a third pass rolling in obtaining a steel billet with a height of 200 mm and a width of 195 mm, a forth pass rolling in obtaining a steel billet with a height of 173 mm and a width of 205 mm, a fifth pass rolling in obtaining a steel billet with a height of 182.4 mm and a width of 182.4 mm, and a sixth pass rolling in obtaining a steel billet with a height of 182.4 mm and a width of 182.4 mm. A finished product steel was produced after the 6 passes of rolling.

### (7) Heating preservation process

The product steel after rolling was subjected to heating preservation under conditions of a pit-entry temperature of the steel of 630 °C, a holding time of 50 h, and a pit-exit temperature of the steel of 90 °C.

### Embodiment 3

### 1. Chemical composition

Chemical composition of a steel includes the following components in percentage by mass: 0.20% of C, 0.27% of Si, 0.50% of Mn, 0.009% of P, 0.003% of S, 0.90% of Cr, 0.05% of Ni, 0.48% of Mo, 0.05% of Cu, and the balance of Fe and inevitable impurities.

### 2. Process for producing a steel bar for automotive shaft sleeve by means of ecological and economical arc furnace

Process route: ECOARC smelting + LF refining + RH refining + continuous casting → heating in a heating furnace → heat preservation → finishing → inspection → packaging and warehousing→delivery.

### (1) ECOARC smelting

The raw material used for smelting was 100% scrap steel, with a loading amount of 118 t and a tapping temperature of 1659°C. A C content of liquid steel at tapping was 0.08% and a P content was 0.009%. Auxiliary materials and alloys were added into the liquid steel when one fourth of the steel has been tapped. A tap weight of the liquid steel was 109 t. A smelting cycle lasted 49 min. Alloy addition per ton of liquid steel were as follows: 4.3 kg/t of siliconmanganese, 11.2 kg/t of low-carbon ferrochrome, 17 kg/t of coke particles (Φ40 mm), 2 kg/t of ferroaluminum (Φ60 mm), and 936 kg/t of heavy melting steel (800mm*600mm). Auxiliary material addition per ton of liquid steel is as follows: 20 kg/t of dolomite (Φ40 mm), 43 kg/t of active lime (Φ50 mm), and 6kg/t of ladle ash.

### (2) LF refining

A high current of 23000 A was used to heat for slag smelting. When the slag surface in the LF fluctuated while the liquid steel and electric arc remain covered, the active lime was supplemented into the liquid steel. After 5 min from addition of the active lime, a first sample was taken for analyzing chemical composition of the liquid steel. Alloys and silicon carbide were then supplemented into the liquid steel according to target values of the chemical composition. The alloys and silicon carbide were introduced into the argon gas stream to promote their rapid melting and homogenization. When the temperature of the liquid steel reached 1596 °C, 2.4kg of diffusion deoxidizer was added to per ton of the liquid steel for diffusion deoxygenation, and the LF door was closed for 12 min. When the temperature of liquid steel reached 1625 °C, a second sample was taken for analyzing chemical composition of the liquid steel to determine a deviation of each chemical element's content from the target value. After the second sample was taken away, a refining cycle lasted 49 min. Supplemented alloy addition per ton of liquid steel was as follows: 3.4 kg/t of ferrosilicon, 1.9 kg/t of high-carbon ferromanganese, 0.52 kg/t of high-carbon ferrochrome, 1.8 kg/t of alumina balls, 0.35 kg/t of coke particles (Φ40 mm), 6.6 kg/t of ferromolybdenum (FeMo60-B), and 1.0 m/t of aluminum wire (Φ10 mm). Auxiliary material addition per ton of liquid steel was as follows: 6 kg/t of active lime (Φ50 mm), and 1 kg/t of silicon carbide (Φ3 mm).

### (3) RH refining

A ladle arrival temperature was 1680 °C, a processing time lasted 30 min, and an argon pressure in the ladle before a vacuum pump startup was controlled to be 0.18 MPa to ensure that the slag surface slightly fluctuated while the liquid steel remained covered. When a vacuum degree of a vacuum chamber reached 100 Pa, timing began for 13 min, while the argon pressure is adjusted to 0.4 MPa for calm argon blowing. After calm argon blowing is completed, 2 m of silicon-calcium alloy cored wire (Φ14 mm) and 0.6 kg of covering agent per ton of liquid steel were added into the liquid steel. A ladle departure temperature is 1629 °C.

### (4) Continuous casting:

A ladle arrival temperature was 1627 °C with an amount of the liquid steel of 98 t, and a hydrogen content in a tundish was controlled to be 1.3 ppm. Protected casting was maintained throughout the continuous casting, and a medium-carbon steel mold flux was used in mold.

### (5) Heating process

The temperature of a continuous casting billet entering the heating furnace was 440°C. The temperature of a preheating section of the heating furnace was 670 °C with a heating time of 1.4 h. The temperature of a heating section 2 was 850 °C with a heating time of 1.3 h. The temperature of a heating section 1 was 1198 °C with a heating time of 1.4 h. The temperature of a soaking section was 1195 °C with a heating time of 1.4 h. The tapping temperature was 1186 °C.

### (6) Rolling process

An initial rolling temperature was 1105 °C, and a final rolling temperature was 885 °C.

BD blooming process for a 390 mm*480 mm continuous casting billet involved 9 passes of rolling on the continuous casting billet, including steps of turning over the casting billet, then performing a first pass rolling on the casting billet with a reduction amount of 65 mm and a second pass rolling with a reduction amount of 70 mm, then turning over the casting billet and performing a third pass rolling on the casting billet with a reduction amount of 64 mm and a forth pass rolling with a reduction amount of 90 mm, and then turning over the casting billet and performing a fifth pass rolling on the casting billet with a reduction amount of 42 mm, a sixth pass rolling with a reduction amount of 40 mm, a seventh pass rolling with a reduction amount of 35 mm, and an eighth pass rolling with a reduction amount of 34 mm, and then turning over the casting billet and performing a ninth pass rolling on the casting billet with a reduction amount of 82 mm, followed by making the casting billet pass through three stands of 850 mm rolling mills, one stand of 735 mm rolling mill, and a 8-stand continuous rolling mill unit for further rolling.

Continuous rolling process in obtaining a finished product with a specification of Φ180 mm involved 6 passes of rolling on a steel billet after BD blooming, including a first pass rolling in obtaining a steel billet with a height of 229 mm and a width of 245 mm, a second pass rolling in obtaining a steel billet with a height of 192 mm and the width is 235 mm, a third pass rolling in obtaining a steel billet with a height of 200 mm and a width of 195 mm, a forth pass rolling in obtaining a steel billet with a height of 173 mm and a width of 205 mm, a fifth pass rolling in obtaining a steel billet with a height of 182.4 mm and a width of 182.4 mm, and a sixth pass rolling in obtaining a steel billet with a height of 182.4 mm and a width of 182.4 mm. A finished product steel was produced after the 6 passes of rolling.

### (7) Heating preservation process

### The product steel after rolling was subjected to heating preservation under conditions of a pit-entry temperature of the steel of 640 °C, a holding time of 52 h, and a pit-exit temperature of the steel of 80 °C.

### Embodiment 4

### 1. Chemical composition

Chemical composition of a steel includes the following components in percentage by mass: 0.21% of C, 0.28% of Si, 0.50% of Mn, 0.008% of P, 0.005% of S, 0.90% of Cr, 0.05% of Ni, 0.50% of Mo, 0.05% of Cu, and the balance of Fe and inevitable impurities.

### 2. Process for producing a steel bar for automotive shaft sleeve by means of ecological and economical arc furnace

Process route: ECOARC smelting + LF refining + RH refining + continuous casting → heating in a heating furnace → heat preservation → finishing → inspection → packaging and warehousing→delivery.

### (1) ECOARC smelting

The raw material used for smelting was 100% scrap steel, with a loading amount of 118 t and a tapping temperature of 1659 °C. A C content of liquid steel at tapping was 0.08% and a P content was 0.006%. Auxiliary materials and alloys were added into the liquid steel when one fourth of the steel has been tapped. A tap weight of the liquid steel was 108 t. A smelting cycle lasted 48 min. Alloy addition per ton of liquid steel were as follows: 4.3 kg/t of siliconmanganese, 11.3 kg/t of low-carbon ferrochrome, 17 kg/t of coke particles (Φ40 mm), 2 kg/t of ferroaluminum (Φ60 mm), and 935 kg/t of heavy melting steel. Auxiliary material addition per ton of liquid steel is as follows: 20 kg/t of dolomite (Φ50 mm), 43 kg/t of active lime (Φ50 mm), and 6kg/t of ladle ash.

### (2) LF refining

A high current of 22000 A was used to heat for slag smelting. When the slag surface in the LF fluctuated while the liquid steel and electric arc remain covered, the active lime was supplemented into the liquid steel. After 5 min from addition of the active lime, a first sample was taken for analyzing chemical composition of the liquid steel. Alloys and silicon carbide were then supplemented into the liquid steel according to target values of the chemical composition. The alloys and silicon carbide were introduced into the argon gas stream to promote their rapid melting and homogenization. When the temperature of the liquid steel reached 1597 °C, 2.3 kg of diffusion deoxidizer was added to per ton of the liquid steel for diffusion deoxygenation, and the LF door was closed for 10 min. When the temperature of liquid steel reached 1628 °C, a second sample was taken for analyzing chemical composition of the liquid steel to determine a deviation of each chemical element's content from the target value. After the second sample was taken away, a refining cycle lasted 49 min. Supplemented alloy addition per ton of liquid steel was as follows: 3.4 kg/t of ferrosilicon, 1.9 kg/t of high-carbon ferromanganese, 0.53 kg/t of high-carbon ferrochrome, 1.8 kg/t of alumina balls, 0.35 kg/t of coke particles (Φ50 mm), 6.6 kg/t of ferromolybdenum (FeMo60-B), and 1.0 m/t of aluminum wire (Φ10 mm). Auxiliary material addition per ton of liquid steel was as follows: 6 kg/t of active lime (Φ50 mm), and 1 kg/t of silicon carbide (Φ4 mm).

### (3) RH refining

A ladle arrival temperature was 1682 °C, a processing time lasted 30 min, and an argon pressure in the ladle before a vacuum pump startup was controlled to be 0.15 MPa to ensure that the slag surface slightly fluctuated while the liquid steel remained covered. When a vacuum degree of a vacuum chamber reached 100 Pa, timing began for 13 min, while the argon pressure is adjusted to 0.3 MPa for calm argon blowing. After calm argon blowing is completed, 2 m of silicon-calcium alloy cored wire (Φ14 mm) and 0.6 kg of covering agent per ton of liquid steel were added into the liquid steel. A ladle departure temperature is 1628 °C.

### (4) Continuous casting:

A ladle arrival temperature was 1625 °C with an amount of the liquid steel of 98 t, and a hydrogen content in a tundish was controlled to be 1.3 ppm. Protected casting was maintained throughout the continuous casting, and a medium-carbon steel mold flux was used in mold.

### (5) Heating process

The temperature of a continuous casting billet entering the heating furnace was 450°C. The temperature of a preheating section of the heating furnace was 660 °C with a heating time of 1.4 h. The temperature of a heating section 2 was 850 °C with a heating time of 1.4 h. The temperature of a heating section 1 was 1198 °C with a heating time of 1.4 h. The temperature of a soaking section was 1195 °C with a heating time of 1.4 h. The tapping temperature was 1185 °C.

### (6) Rolling process

An initial rolling temperature was 1100 °C, and a final rolling temperature was 884 °C.

BD blooming process for a 390 mm*480 mm continuous casting billet involved 9 passes of rolling on the continuous casting billet, including steps of turning over the casting billet, then performing a first pass rolling on the casting billet with a reduction amount of 65 mm and a second pass rolling with a reduction amount of 70 mm, then turning over the casting billet and performing a third pass rolling on the casting billet with a reduction amount of 64 mm and a forth pass rolling with a reduction amount of 90 mm, and then turning over the casting billet and performing a fifth pass rolling on the casting billet with a reduction amount of 42 mm, a sixth pass rolling with a reduction amount of 40 mm, a seventh pass rolling with a reduction amount of 35 mm, and an eighth pass rolling with a reduction amount of 34 mm, and then turning over the casting billet and performing a ninth pass rolling on the casting billet with a reduction amount of 82 mm, followed by making the casting billet pass through three stands of 850 mm rolling mills, one stand of 735 mm rolling mill, and a 8-stand continuous rolling mill unit for further rolling.

Continuous rolling process in obtaining a finished product with a specification of Φ180 mm involved 6 passes of rolling on a steel billet after BD blooming, including a first pass rolling in obtaining a steel billet with a height of 229 mm and a width of 245 mm, a second pass rolling in obtaining a steel billet with a height of 192 mm and the width is 235 mm, a third pass rolling in obtaining a steel billet with a height of 200 mm and a width of 195 mm, a forth pass rolling in obtaining a steel billet with a height of 173 mm and a width of 205 mm, a fifth pass rolling in obtaining a steel billet with a height of 182.4 mm and a width of 182.4 mm, and a sixth pass rolling in obtaining a steel billet with a height of 182.4 mm and a width of 182.4 mm. A finished product steel was produced after the 6 passes of rolling.

### (7) Heating preservation process

The product steel after rolling was subjected to heating preservation under conditions of a pit-entry temperature of the steel of 630 °C, a holding time of 50 h, and a pit-exit temperature of the steel of 80 °C.

### Embodiment 5

### 1. Chemical composition

Chemical composition of a steel includes the following components in percentage by mass: 0.19% of C, 0.28% of Si, 0.48% of Mn, 0.010% of P, 0.004% of S, 0.90% of Cr, 0.04% of Ni, 0.48% of Mo, 0.45% of Cu, and the balance of Fe and inevitable impurities.

### 2. Process for producing a steel bar for automotive shaft sleeve by means of ecological and economical arc furnace

Process route: ECOARC smelting + LF refining + RH refining + continuous casting -heating in a heating furnace → heat preservation → finishing → inspection → packaging and warehousing→delivery.

### (1) ECOARC smelting

The raw material used for smelting was 100% scrap steel, with a loading amount of 119 t and a tapping temperature of 1659 °C. A C content of liquid steel at tapping was 0.08% and a P content was 0.008%. Auxiliary materials and alloys were added into the liquid steel when one fourth of the steel has been tapped. A tap weight of the liquid steel was 110 t. A smelting cycle lasted 49 min. Alloy addition per ton of liquid steel were as follows: 4.3 kg/t of siliconmanganese, 11 kg/t of low-carbon ferrochrome, 17 kg/t of coke particles (Φ50 mm), 2 kg/t of ferroaluminum (Φ50 mm), and 935 kg/t of heavy melting steel. Auxiliary material addition per ton of liquid steel is as follows: 20 kg/t of dolomite (Φ50 mm), 43 kg/t of active lime (Φ50 mm), and 6 kg/t of ladle ash.

### (2) LF refining

A high current of 23000 A was used to heat for slag smelting. When the slag surface in the LF fluctuated while the liquid steel and electric arc remain covered, the active lime was supplemented into the liquid steel. After 5 min from addition of the active lime, a first sample was taken for analyzing chemical composition of the liquid steel. Alloys and silicon carbide were then supplemented into the liquid steel according to target values of the chemical composition. The alloys and silicon carbide were introduced into the argon gas stream to promote their rapid melting and homogenization. When the temperature of the liquid steel reached 1595 °C, 2.5 kg of diffusion deoxidizer was added to per ton of the liquid steel for diffusion deoxygenation, and the LF door was closed for 10 min. When the temperature of liquid steel reached 1626 °C, a second sample was taken for analyzing chemical composition of the liquid steel to determine a deviation of each chemical element's content from the target value. After the second sample was taken away, a refining cycle lasted 52 min. Supplemented alloy addition per ton of liquid steel was as follows: 3.4 kg/t of ferrosilicon, 1.9 kg/t of high-carbon ferromanganese, 0.53 kg/t of high-carbon ferrochrome, 1.8 kg/t of alumina balls, 0.35 kg/t of coke particles (Φ50 mm), 6.6 kg/t of ferromolybdenum (FeMo60-B), and 1.0 m/t of aluminum wire (Φ10 mm). Auxiliary material addition per ton of liquid steel was as follows: 6 kg/t of active lime (Φ50 mm), and 1 kg/t of silicon carbide (Φ4 mm).

### (3) RH refining

A ladle arrival temperature was 1682 °C, a processing time lasted 29 min, and an argon pressure in the ladle before a vacuum pump startup was controlled to be 0.2 MPa to ensure that the slag surface slightly fluctuated while the liquid steel remained covered. When a vacuum degree of a vacuum chamber reached 100 Pa, timing began for 12 min, while the argon pressure is adjusted to 0.3 MPa for calm argon blowing. After calm argon blowing is completed, 2 m of silicon-calcium alloy cored wire (Φ14 mm) and 0.6 kg of covering agent per ton of liquid steel were added into the liquid steel. A ladle departure temperature is 1628 °C.

### (4) Continuous casting:

A ladle arrival temperature was 1627 °C with an amount of the liquid steel of 98 t, and a hydrogen content in a tundish was controlled to be 1.5 ppm. Protected casting was maintained throughout the continuous casting, and a medium-carbon steel mold flux was used in mold.

### (5) Heating process

The temperature of a continuous casting billet entering the heating furnace was 420°C. The temperature of a preheating section of the heating furnace was 660 °C with a heating time of 1.3 h. The temperature of a heating section 2 was 850 °C with a heating time of 1.3 h. The temperature of a heating section 1 was 1198 °C with a heating time of 1.3 h. The temperature of a soaking section was 1198 °C with a heating time of 1.3 h. The tapping temperature was 1186 °C.

### (6) Rolling process

An initial rolling temperature was 1100 °C, and a final rolling temperature was 880 °C.

BD blooming process for a 390 mm*480 mm continuous casting billet involved 9 passes of rolling on the continuous casting billet, including steps of turning over the casting billet, then performing a first pass rolling on the casting billet with a reduction amount of 65 mm and a second pass rolling with a reduction amount of 70 mm, then turning over the casting billet and performing a third pass rolling on the casting billet with a reduction amount of 64 mm and a forth pass rolling with a reduction amount of 90 mm, and then turning over the casting billet and performing a fifth pass rolling on the casting billet with a reduction amount of 42 mm, a sixth pass rolling with a reduction amount of 40 mm, a seventh pass rolling with a reduction amount of 35 mm, and an eighth pass rolling with a reduction amount of 34 mm, and then turning over the casting billet and performing a ninth pass rolling on the casting billet with a reduction amount of 82 mm, followed by making the casting billet pass through three stands of 850 mm rolling mills, one stand of 735 mm rolling mill, and a 8-stand continuous rolling mill unit for further rolling.

Continuous rolling process in obtaining a finished product with a specification of Φ180 mm involved 6 passes of rolling on a steel billet after BD blooming, including a first pass rolling in obtaining a steel billet with a height of 229 mm and a width of 245 mm, a second pass rolling in obtaining a steel billet with a height of 192 mm and the width is 235 mm, a third pass rolling in obtaining a steel billet with a height of 200 mm and a width of 195 mm, a forth pass rolling in obtaining a steel billet with a height of 173 mm and a width of 205 mm, a fifth pass rolling in obtaining a steel billet with a height of 182.4 mm and a width of 182.4 mm, and a sixth pass rolling in obtaining a steel billet with a height of 182.4 mm and a width of 182.4 mm. A finished product steel was produced after the 6 passes of rolling.

### (7) Heating preservation process

The product steel after rolling was subjected to heating preservation under conditions of a pit-entry temperature of the steel of 650 °C, a holding time of 54 h, and a pit-exit temperature of the steel of 90 °C.

**Inspection results of finished products obtained in Embodiments 1-5**
(1) Macrostructure of steels with a specification of Φ180 mm

| No. | General Porosity | Centre Porosity | Ingot Pattern Segregation | Spotted Segregation | Edge Spotted Segregation |
|---|---|---|---|---|---|
| Standard | ≤1.5 | ≤1.5 | ≤1.5 | ≤1.0 | ≤1.0 |
| Embodiment 1 | 0.5 | 0.5 | 0.5 | 0 | 0 |
| Embodiment 1 | 0.5 | 0.5 | 0.5 | 0 | 0 |
| Embodiment 2 | 0.5 | 0.5 | 0.5 | 0 | 0 |
| Embodiment 2 | 0.5 | 0.5 | 0.5 | 0 | 0 |
| Embodiment 3 | 0.5 | 0.5 | 0.5 | 0 | 0 |
| Embodiment 3 | 0.5 | 0.5 | 0.5 | 0 | 0 |
| Embodiment 4 | 0.5 | 0.5 | 0.5 | 0 | 0 |
| Embodiment 4 | 0.5 | 0.5 | 0.5 | 0 | 0 |
| Embodiment 5 | 0.5 | 0.5 | 0.5 | 0 | 0 |
| Embodiment 5 | 0.5 | 0.5 | 0.5 | 0 | 0 |

(2) Non-metallic inclusions of steels with a specification of Φ180 mm

| Category | Class A | | Class B | | Class C | | Class D | | DS |
|---|---|---|---|---|---|---|---|---|---|
| | Fine | Coarse | Fine | Coarse | Fine | Coarse | Fine | Coarse | |
| Grade, No more than | 2 | 2 | 1.5 | 1.5 | 1.5 | 1.5 | 1.5 | 1.5 | 2 |
| Embodiment 1 | 1 | 0.5 | 0 | 0 | 0 | 0 | 0 | 0 | 0 |
| Embodiment 1 | 1 | 0.5 | 0 | 0 | 0 | 0 | 0 | 0 | 0 |
| Embodiment 2 | 1 | 0.5 | 0 | 0 | 0 | 0 | 0 | 0 | 0 |
| Embodiment 2 | 1 | 0.5 | 0 | 0 | 0 | 0 | 0 | 0 | 0 |
| Embodiment 3 | 1 | 0.5 | 0 | 0 | 0 | 0 | 0 | 0 | 0 |
| Embodiment 3 | 1 | 0.5 | 0 | 0 | 0 | 0 | 0 | 0 | 0 |
| Embodiment 4 | 1 | 0.5 | 0 | 0 | 0 | 0 | 0 | 0 | 0 |
| Embodiment 4 | 1 | 0.5 | 0 | 0 | 0 | 0 | 0 | 0 | 0 |
| Embodiment 5 | 1 | 0.5 | 0 | 0 | 0 | 0 | 0 | 0 | 0 |
| Embodiment 5 | 1 | 0.5 | 0 | 0 | 0 | 0 | 0 | 0 | 0 |

(2) Mechanical properties of steels with a specification of Φ180 mm

| No. | Quenching/°C | | Tempering/°C | | Rₘ/ MPa | Rₑ₁/ MPa | A/% | z/% | Impact/KU₂ (Longitudinal direction)/J |
|---|---|---|---|---|---|---|---|---|---|
| Standard | Holding time | 880, water cooling | Holding time | 500, water cooling | ≥885 | 2685 | ≥12 | ≥50 | ≥78 |
| Embodim ent 1 | 1.0h | 880, water cooling | 1.8h | 500, water cooling | 1105 | 865 | 18 | 60 | 95 |
| Embodim ent 1 | 1.0h | 880, water cooling | 1.8h | 500, water cooling | 1110 | 870 | 16 | 62 | 88 |
| Embodim ent 2 | 1.0h | 880, water cooling | 1.8h | 500, water cooling | 1085 | 873 | 15 | 60 | 96 |
| Embodim ent 2 | 1.0h | 880, water cooling | 1.8h | 500, water cooling | 1078 | 880 | 17 | 65 | 92 |
| Embodim ent 3 | 1.0h | 880, water cooling | 1.8h | 500, water cooling | 1195 | 910 | 15 | 62 | 89 |
| Embodim ent 3 | 1.0h | 880, water cooling | 1.8h | 500, water cooling | 1085 | 890 | 16 | 64 | 90 |
| Embodim ent 4 | 1.0h | 880, water cooling | 1.8h | 500, water cooling | 1100 | 870 | 16 | 68 | 88 |
| Embodim ent 4 | 1.0h | 880, water cooling | 1.8h | 500, water cooling | 998 | 858 | 16 | 70 | 87 |
| Embodim ent 5 | 1.0h | 880, water cooling | 1.8h | 500, water cooling | 1055 | 870 | 17 | 65 | 79 |
| Embodim ent 5 | 1.0h | 880, water cooling | 1.8h | 500, water cooling | 1070 | 879 | 18 | 68 | 82 |

Any one skilled in the art may make many variations and modifications to the technical solution of the invention, or amend it into equivalent embodiments with equivalent changes using the approaches and technical content disclosed above, without departing from the scope of the technical solution of the invention. Therefore, all the content not departing from the technical solution of the invention, and any simple amendments, equivalent changes and modifications to the previous embodiments according to the technical essence of the invention, fall within the protective scope of the technical solution of the invention.

## Claims

1. A steel bar for automotive bushings, comprising following components in percentage by mass: 0.18-0.23% of C, 0.20-0.35% of Si, 0.42-0.60% of Mn, less than or equal to 0.015% of P, less than or equal to 0.010% of S, 0.82-1.00% of Cr, less than or equal to 0.25% of Ni, 0.41-0.53% of Mo, less than or equal to 0.15% of Cu, and the balance of Fe and inevitable impurities.

2. A method for producing the steel bar for automotive bushings according to claim 1 by means of ecological and economical arc furnace, comprising processes of ecological and economical arc furnace smelting, LF refining, RH refining, continuous casting, heating furnace heating, and rolling;
wherein, the ecological and economical arc furnace smelting uses scrap steel for smelting with a scrap steel loading amount of 116-122 t and a tapping temperature of 1655-1665°C, wherein a C content of a liquid steel at tapping is 0.08-0.10% and a P content is less than or equal to 0.010%, auxiliary materials and alloys are added into the liquid steel between one forth and one third of the tapping, a tap weight of liquid steel is 107-112 t, and a smelting cycle lasts 45-55 min, wherein alloy addition per ton of steel is as follows: 4.3-4.4 kg/t of silicomanganese, 11-11.5 kg/t of low-carbon ferrochrome, 17-17.2 kg/t of coke particles, 2-2.2 kg/t of ferroaluminum, and 930-940 kg/t of heavy melting steel, and auxiliary material addition per ton of steel is as follows: 20-21 kg/t of dolomite, 43-44 kg/t of active lime, and 6-6.2 kg/t of ladle ash.

3. The method according to claim 2, wherein the LF refining adopts a high current of 20000-25000 A to heat for slag smelting, when a slag surface in the LF fluctuates while the liquid steel and electric arc remain covered, active lime is supplemented into the liquid steel; after 5 min from addition of active lime, a first sample is taken for analyzing chemical composition of the liquid steel, and alloys and silicon carbide are then supplemented into the liquid steel according to the target values of the chemical composition; when a temperature of the liquid steel reaches 1590-1600 °C, 2-3 kg of diffusion deoxidizer is added to per ton of steel for diffusion deoxygenation, and the door of the LF is closed for 10-12 min; when the temperature of liquid steel reaches 1620-1630 °C, a second sample is taken for analyzing chemical composition of the liquid steel to determine a deviation of each chemical element's content from the target value; after the second sample is taken away, a refining cycle lasts 45-55 min; wherein supplemented alloy addition per ton of liquid steel is as follows: 3.4-3.5 kg/t of ferrosilicon, 1.9-2.0 kg/t of high-carbon ferromanganese, 0.5-0.55 kg/t of high-carbon ferrochrome, 1.8-1.9 kg/t of alumina balls, 0.35-0.36 kg/t of coke particles, 6.6-6.7 kg/t of ferromolybdenum, and 1-1.1 m/t of aluminum wire; and auxiliary material addition per ton of liquid steel is as follows: 6-6.2 kg/t of active lime, and 1-1.1 kg/t of silicon carbide; and
for the RH refining, a ladle arrival temperature is 1675-1685 °C, an processing time lasts 28-32 min, an argon pressure in the ladle before a vacuum pump startup is controlled to be 0.1-0.3 MPa, and ensure that the slag surface slightly fluctuates while the liquid steel remains covered; when a vacuum degree of a vacuum chamber reaches 100-110 Pa, timing begins for 10-15min, while the argon pressure is adjusted to 0.3-0.5 MPa for calm argon blowing, 2-2.1 m of silicon-calcium alloy cored wire and 0.6-0.7 kg of covering agent per ton of steel are added into the liquid steel after calm argon blowing, and a ladle departure temperature is 1625-1635 °C.

4. The method according to claim 2, wherein, for the continuous casting, a ladle arrival temperature is 1620-1630 °C with an amount of the liquid steel of 95-103 t, a hydrogen content in a tundish is controlled to be less than or equal to 2 ppm, protected casting is maintained throughout the continuous casting, and a medium-carbon steel mold flux is used in mold.

5. The method according to claim 2, wherein, for the heating furnace heating process, the temperature of a continuous casting billet entering the heating furnace is 350-550 °C, a temperature of a preheating section of the heating furnace is 650-700 °C with a heating time of 1.3-1.5 h, a temperature of a heating section 2 is 840-860 °C with a heating time of 1.3-1.5 h, a temperature of a heating section 1 is 1190-1220 °C with a heating time of 1.3-1.5 h, a temperature of a soaking section is 1180-1210 °C with a holding time of 1.3-1.5 h, and a tapping temperature is 1180-1190 °C.

6. The method according to claim 2, wherein the rolling process comprises:
a breakdown blooming process, involving 9 passes of rolling on the continuous casting billet after heating, comprising steps of turning over the casting billet, then performing a first pass rolling on the casting billet with a reduction amount of 65-65.1 mm and a second pass rolling with a reduction amount of 70-70.1 mm, then turning over the casting billet and performing a third pass rolling on the casting billet with a reduction amount of 64-64.1 mm and a forth pass rolling with a reduction amount of 90-90.1 mm, and then turning over the casting billet and performing a fifth pass rolling on the casting billet with a reduction amount of 42-42.1 mm, a sixth pass rolling with a reduction amount of 40-40.1 mm, a seventh pass rolling with a reduction amount of 35-35.1 mm, and an eighth pass rolling with a reduction amount of 34-34.1 mm, and then turning over the casting billet and performing a ninth pass rolling on the casting billet with a reduction amount of 82-82.1 mm, followed by making the casting billet pass through three stands of 850 mm rolling mills, one stand of 735 mm rolling mill, and a 8-stand continuous rolling mill unit for further rolling; and
a finished product rolling process, involving 6 passes of rolling on a steel billet after breakdown blooming, comprising a first pass rolling in obtaining a steel billet with a height of 229-229.1 mm and a width of 245-245.1 mm, a second pass rolling in obtaining a steel billet with a height of 192-192.1 mm and a width of 235-235.1 mm, a third pass rolling in obtaining a steel billet with a height of 200-200.1 mm and a width of 195-195.1 mm, a fourth pass rolling in obtaining a steel billet with a height of 173-173.1 mm and a width of 205-205.1 mm, a fifth pass rolling in obtaining a steel billet with a height of 182.4-182.5 mm and a width of 182.4-182.5 mm, and a sixth pass rolling in obtaining a steel billet with a height of 182.4-182.5 mm and a width of 182.4-182.5 mm, which is the finished product steel.

7. The method according to claim 6, wherein an initial rolling temperature of the rolling process is 1100-1130 °C, and a final rolling temperature is 850-950 °C.

8. The method according to claim 2, wherein a steel after rolling is subjected to heat preservation under conditions of a pit-entry temperature of the steel of greater than or equal to 600 °C, a holding time of 48-55 h, and a pit-exit temperature of the steel of less than or equal to 150 °C.

9. The method according to claim 3, wherein a diameter of the coke particles is 20-60 mm, a diameter of the ferro-aluminum is 40-70 mm, a size of the heavy melting scrap is greater than or equal to 800 mm*600 mm, a diameter of the dolomite is 20-70 mm, a diameter of the active lime is 10-70 mm, a diameter of the alumina balls is 10-15 mm, the ferromolybdenum is FeMo60-B, a diameter of the aluminum wire is 10-12 mm, a diameter of the silicon carbide is 2-5 mm, and a diameter of the silicon-calcium alloy cored wire is 12-14 mm.

10. The method according to claim 8, wherein the steel after heat preservation is subjected to heat treatment, comprising the following steps of:
1) quenching the steel at a temperature of 870-890 °C for 0.8-1.2 h, followed by oil cooling the steel; and
2) tempering the quenched steel at a temperature of 490-510 °C for 1.6-2.0 h, followed by water cooling the steel.
